# EUROPEAN PATENT SPECIFICATION

(11) **EP 2 977 657 B1**
(45) Date of publication and mention of the grant of the patent: **18.04.2018**
(21) Application number: 15175961.0
(22) Date of filing: 08.07.2015
(51) Int. Cl.: F16K 11/00, F16K 31/00

(54) **CONSTANT WATER TEMPERATURE FAUCET STRUCTURE**
WASSERHAHNSTRUKTUR FÜR KONSTANTE WASSERTEMPERATUR
STRUCTURE DE ROBINET À TEMPÉRATURE D'EAU CONSTANTE

(30) Priority: 22.07.2014 CN 201420405292 U
(43) Date of publication of application: 27.01.2016
(73) Proprietor: Xiamen Runner Industrial Corporation, Xiamen 361021 (CN)
(72) Inventor: Lei, Zheng-Zhen, 361021 Xiamen (CN)
(74) Representative: Lang, Christian

(56) References cited:
- CN-A- 102 221 100
- DE-A1- 4 206 703
- US-A- 5 779 139

## Description

### BACKGROUND OF THE INVENTION

### Field of the Invention

The present invention relates to a faucet structure, and in particular to a constant water temperature faucet structure.

### THE PRIOR ARTS

The constant water temperature faucet structure, is also referred to as constant temperature water faucet, or constant temperature shower water mixing faucet. Its function is to mix the hot and cold water automatically into warm water of preset temperature.

In the early years, the hot and cold water mixing faucet is referred to as a Two Handle Mixer. In operation, a user has to rotate the hot water and cold water rotation knobs, to control and regulate the input amount of hot water and cold water, to mix them into warm water of a desired temperature. In recent years, the second generation hot-cold water mixing faucet is referred to as a Single Handle Faucet, having its center provided with a temperature adjusting valve core of ceramic plate. In operation, the user may swing the handle to the left or to the right, to adjust the temperature of the mixed water; or the user may swing the handle upward or downward, to adjust the amount of the output water. Different designs of conventional water mixing faucets are known, for example, from the documents US 5 779 139 A, DE 42 06 703 A1 and CN 102 221 100 A including a main body, a cold water input tube and a hot water input tube.

However, for the two types of conventional water mixing faucets, when the pressure of hot water or cold water changes suddenly, or when the temperature of the hot water changes suddenly, the temperature of the mixed water has to be readjusted again through meticulous manual operations. Therefore, presently, the design and performance of the water mixing faucet is not quite satisfactory, and it leaves much room for improvement.

### SUMMARY OF THE INVENTION

In view of the problems and drawbacks of the prior art, the present invention provides a constant water temperature faucet structure, to overcome the shortcomings of the prior art.

A major objective of the present invention is to provide a constant water temperature faucet structure, that is capable of regulating the temperature of output water at fast speed, reducing the length of water channel, while saving the space occupied by the faucet.

The constant water temperature faucet structure of the present invention includes: a main body, a cold water input tube, a hot water input tube, an output water switching handle, and a temperature control rotation handle. Wherein, the main body includes: an outer shell, a constant temperature valve core, a water channel switching rod, a central hole channel, a compression spring, a tight seal pad, a water outlet hole, and a water output hole.

In the structure mentioned above, the cold water input tube and the hot water input tube are connected respectively to the outer shell, inside the outer shell is provided with a constant temperature valve core connected to the cold water input tube and the hot water input tube, and the water channel switching rod in communication with a water output port of the constant temperature valve core. In the central portion of the water channel switching rod is provided with a central hole channel. On the surface of the water channel switching rod is provided with a water outlet hole in communication with the central hole channel. On the outer shell is provided with the water output hole in communication with the water outlet hole, while on the water outlet hole is provided with a tight seal pad, having its center provided with a water passage hole. A compression spring is provided between the tight seal pad and the water outlet hole, and the constant temperature valve core is connected to the temperature control rotation handle located at one end of the outer shell, while the output water switching handle located at the other end of the outer shell is connected to the water channel switching rod.

In addition, the axial line of the water output hole is perpendicular to the plane of axial lines of the hot and cold water input tubes. The two water output holes on the outer shell are disposed symmetrically on the two sides of the plane of axial lines of the hot and cold water input tubes.

Further, the water channel switching rod is designed to have three working positions: one water-close working position, and two water-output working positions. When the water channel switching rod is in the water-close working position, the axial line of the water outlet hole is in the plane of axial lines of the hot and cold water input tubes. When the water channel switching rod is in the water-output working position, the axial line of the water outlet hole is perpendicular to the plane of axial lines of the hot and cold water input tubes. At this time, the water outlet hole is in communication with the water output hole.

Compared with the prior art, the present invention has the following advantages: simple in construction and convenient in installation, to achieve cost reduction; water temperature can be adjusted at high speed, to reduce length of water channel, and save the space occupied by the faucet.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the scope of the present invention will become apparent to those skilled in the art from this detailed descriptions.

### BRIEF DESCRIPTION OF THE DRAWINGS

The related drawings in connection with the detailed descriptions of the present invention to be made later are described briefly as follows, in which:
Fig. 1 is a perspective view of a constant water temperature faucet structure according to an embodiment of the present invention;
Fig. 2 is a cross section view of a constant water temperature faucet structure according to an embodiment of the present invention;
Fig. 3 is a cross section view of a constant water temperature faucet structure along an A-A line of Fig. 2 according to an embodiment of the present invention;
Fig. 4 is a partially exploded view of a constant water temperature faucet structure of Fig. 1 according to an embodiment of the present invention;
Fig. 5 is another partially exploded view of a constant water temperature faucet structure of Fig. 1 according to an embodiment of the present invention; and
Fig. 6 is an exploded view of an output water switching handle according to an embodiment of the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

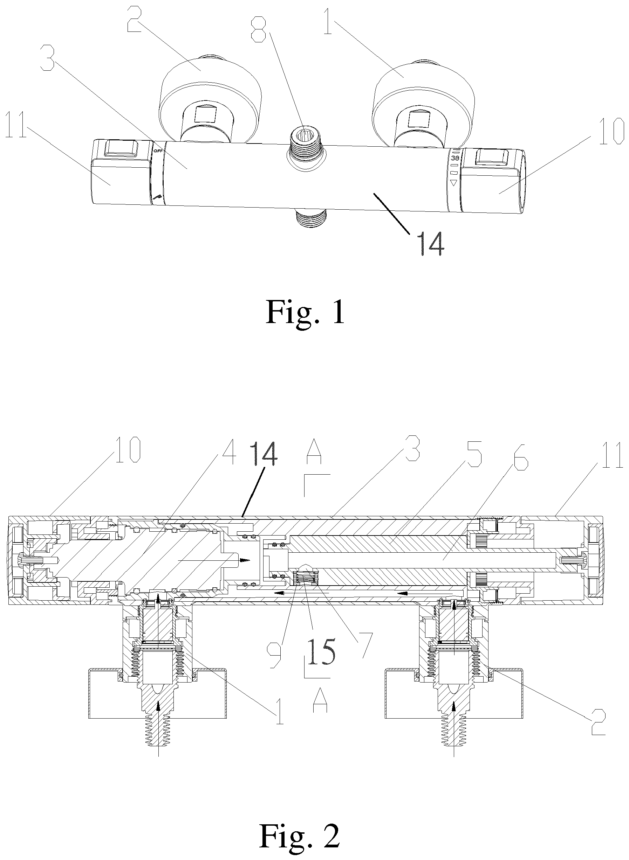

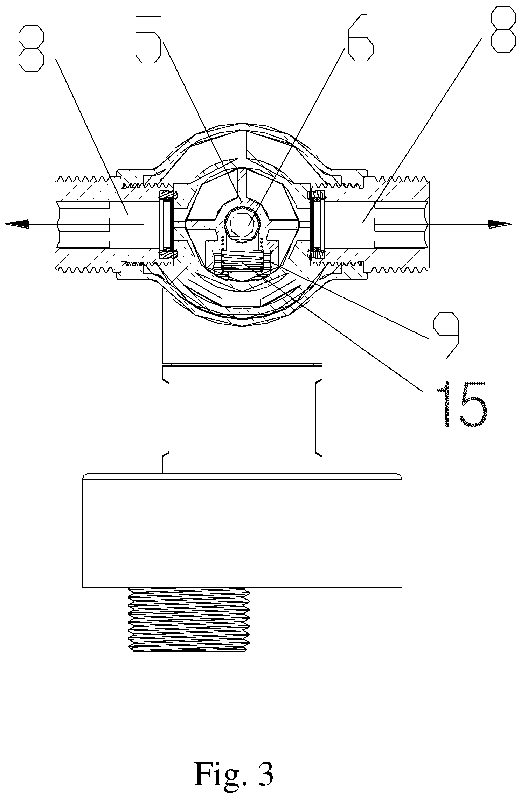

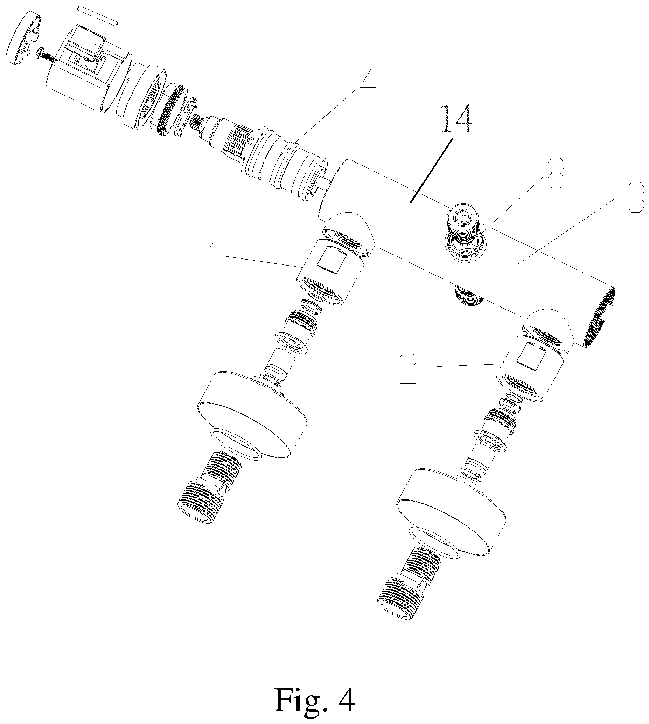

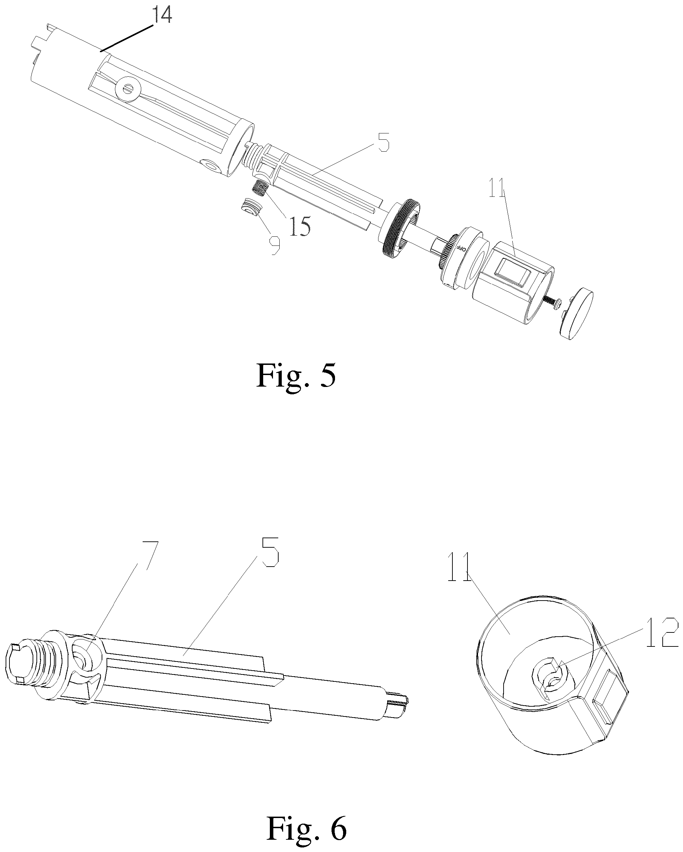

Refer to Figs. 1 to 6 respectively for a perspective view of a constant water temperature faucet structure according to an embodiment of the present invention; a cross section view of a constant water temperature faucet structure according to an embodiment of the present invention; a cross section view of a constant water temperature faucet structure along an A-A line of Fig. 2 according to an embodiment of the present invention; a partially exploded view of a constant water temperature faucet structure of Fig. 1 according to an embodiment of the present invention; another partially exploded view of a constant water temperature faucet structure of Fig. 1 according to an embodiment of the present invention; and an exploded view of an output water switching handle according to an embodiment of the present invention.

As shown in Figs. 1 to 6, the constant water temperature faucet structure includes: a main body 14, a cold water input tube 1, a hot water input tube 2, an output water switching handle 11, and a temperature control rotation handle 10. Wherein, the main body 14 includes: an outer shell 3, a constant temperature valve core 4, a water channel switching rod 5, a central hole channel 6, a water outlet hole 7, a compression spring 15, a tight seal pad 9, and a water output hole 8.

In the structure mentioned above, the cold water input tube 1 and the hot water input tube 2 are connected respectively to the outer shell 3, inside the outer shell 3 is provided with the constant temperature valve core 4 connected to the cold water input tube 1 and the hot water input tube 2, and the water channel switching rod 5 in communication with a water output port of the constant temperature valve core 4. In the central portion of the water channel switching rod 5 is provided with a central hole channel 6. On the surface of the water channel switching rod 5 is provided with a water outlet hole 7 in communication with the central hole channel 6. On the outer shell 3 is provided with the water output hole 8 in communication with the water outlet hole 7, on the water outlet hole 7 is provided with a tight seal pad 9, having its center provided with a water passage hole. A compression spring 15 is provided between the tight seal pad 9 and the water outlet hole 7, and the constant temperature valve core 4 is connected to the temperature control rotation handle 10 located at one end of the outer shell 3, while the output water switching handle 11 located at the other end of the outer shell 3 is connected to the water channel switching rod 5.

In addition, to realize better design and achieve two different water outputs, the axial line of the water output hole 8 is perpendicular to the plane of axial lines of the cold and hot water input tubes 1 and 2. The two water output holes 8 on the outer shell 3 are disposed symmetrically on the two sides of the plane of axial lines of the cold and hot water input tubes 1 and 2.

Further, the water channel switching rod 5 is designed to have three working positions: one water-close working position, and two water-output working positions. When the water channel switching rod 5 is in the water-close working position, the axial line of the water outlet hole 7 is in the plane of axial lines of the cold and hot water input tubes 1 and 2. When the water channel switching rod 5 is in the water-output working position, the axial line of the water outlet hole 7 is perpendicular to the plane of axial lines of the cold and hot water input tubes 1 and 2. At this time, the water outlet hole 7 is in communication with the water output hole 8.

In order to reduce weight and facilitate regulation, the rear end cross section of the water channel switching rod 5 is of a cross shape, while the output water switching handle 11 is a circular sleeve. At the bottom of the circular sleeve is provided with a protrusion column. On the protrusion column is provided with an open slot 12 matching and working in cooperation with the rear end cross shape cross section of the water channel switching rod 5.

When the constant water temperature faucet structure is in operation, cold water and hot water flow respectively into the outer shell 3 through the cold water input tube 1 and the hot water input tube 2. Then, the cold water and hot water are adjusted by the temperature control rotation handle 10, and subsequently they are regulated and mixed by the constant temperature valve core 4. Afterwards, warm water of the desired temperature is output from the output port of the constant temperature valve core 4. Finally, output water switching handle 11 is rotated, to make the water outlet hole 7 in communication with the water output hole 8, such that warm water of desired temperature is output from the water output hole 8 located between the cold and hot water input tubes 1 and 2. Compared with the prior art, the present invention has the following advantages: simple in construction and convenient in installation, to achieve cost reduction; water temperature can be adjusted at high speed, to reduce length of water channel, and save the space occupied by the faucet.

The above detailed description of the preferred embodiment is intended to describe more clearly the characteristics of the present invention. However, the preferred embodiments disclosed above are not intended to be any restrictions to the scope of the present invention. Conversely, its purpose is to include the various changes and equivalent arrangements which are within the scope of the appended claims.

## Claims

1. A constant water temperature faucet structure, comprising: a main body (14), a cold water input tube (1), a hot water input tube (2), an output water switching handle (11), and a temperature control rotation handle (10), wherein the main body (14) has an outer shell (3) that receives a constant temperature valve core (4), a water channel switching rod (5) and a central hole channel (6), wherein the cold water input tube (1) and the hot water input tube (2) are connected respectively to the outer shell (3), wherein the constant temperature valve core (4) provided inside the outer shell (3) is connected to the cold water input tube (1) and the hot water input tube (2), and wherein the water channel switching rod (5) is in communication with a water output port of the constant temperature valve core (4), wherein the central hole channel (6) is provided in a central portion of the water channel switching rod (5), and wherein a water outlet hole (7) is formed on a surface of the water channel switching rod (5), wherein the water outlet hole (7) communicates with the central hole channel (6), wherein on the outer shell (3) a water output hole (8) is provided that communicates with the water outlet hole (7), and wherein the constant temperature valve core (4) is connected to the temperature control rotation handle (10) located at one end of the outer shell (3), while the output water switching handle (11) located at other end of the outer shell (3) is connected to the water channel switching rod (5),
**characterized in that** the constant water temperature faucet structure further comprises:
a compression spring (15), and
a tight seal pad (9),
wherein the tight seal pad (9) is disposed on the water outlet hole (7) and having its center provided with a water passage hole, and wherein the compression spring (15) is provided between the tight seal pad (9) and the water outlet hole (7).

2. The constant water temperature faucet structure as claimed in claim 1, wherein an axial line of the water output hole (8) is perpendicular to a plane of the axial lines of the hot and cold water input tubes (1,2), and wherein the two water output holes (8) on the outer shell (3) are disposed symmetrically on two sides of the plane of the axial lines of the hot and cold water input tubes (1,2).

3. The constant water temperature faucet structure as claimed in claim 2, wherein the water channel switching rod (5) has three working positions being one water-close working position and two water-output working positions,
wherein, when the water channel switching rod (5) is in the water-close working position, the axial line of the water outlet hole (7) is in the plane of the axial lines of the hot and cold water input tubes (1,2), and
when the water channel switching rod (5) is in the water-output working position, the axial line of the water outlet hole (7) is perpendicular to the plane of the axial lines of the hot and cold water input tubes (1, 2), such that the water outlet hole (7) is in communication with the water output hole (8).

## Patentansprüche

1. Wasserhahnstruktur für konstante Temperatur, welche umfasst: einen Hauptkörper (14), ein Kaltwassereinlassrohr (1), ein Heißwassereinlassrohr (2), einen Umschaltgriff für Auslasswasser (11) und einen Drehgriff für die Temperatursteuerung (10), wobei der Hauptkörper (14) ein äußeres Gehäuse (3), welches einen Ventilkern für konstante Temperatur (4) aufnimmt, einen Umschaltstab für den Wasserkanal (5) und einen zentralen hohlen Kanal (6) aufweist, wobei das Kaltwassereinlassrohr (1) und das Heißwassereinlassrohr (2) jeweils mit dem äußeren Gehäuse (3) verbunden sind, wobei der Ventilkern für konstante Temperatur (4), welcher innerhalb des äußeren Gehäuses (3) bereitgestellt ist, mit dem Kaltwassereinlassrohr (1) und dem Heißwassereinlassrohr (2) verbunden ist, und wobei der Umschaltstab für den Wasserkanal (5) in Kommunikation mit einem Wasserauslassanschluss des Ventilkerns für konstante Temperatur (4) steht, wobei der zentrale hohle Kanal (6) in einem zentralen Abschnitt des Umschaltstabs für den Wasserkanal (5) bereitgestellt ist und wobei ein Wasserausgabeloch (7) an einer Fläche des Umschaltstabs für den Wasserkanal (5) ausgebildet ist, wobei das Wasserausgabeloch (7) mit dem zentralen hohlen Kanal (6) kommuniziert, wobei an dem äußeren Gehäuse (3) ein Wasserauslassloch (8) bereitgestellt ist, welches mit dem Wasserausgabeloch (7) kommuniziert, und wobei der Ventilkern für konstante Temperatur (4) mit dem Drehgriff für die Temperatursteuerung (10), welcher an einem Ende des äußeren Gehäuses (3) angeordnet ist, verbunden ist, während der Umschaltgriff für Auslasswasser (11), welcher an einem anderen Ende des äußeren Gehäuses (3) angeordnet ist, mit dem Umschaltstab für den Wasserkanal (5) verbunden ist,
**dadurch gekennzeichnet, dass** die Wasserhahnstruktur für konstante Temperatur ferner umfasst:
eine Druckfeder (15) und
ein Abdichtungspolster (9),
wobei das Abdichtungspolster (9) an dem Wasserausgabeloch (7) angeordnet ist und sein Zentrum mit einem Wasserdurchgangsloch bereitgestellt ist, und wobei die Druckfeder (15) zwischen dem Abdichtungspolster (9) und dem Wasserausgabeloch (7) bereitgestellt ist.

2. Wasserhahnstruktur für konstante Temperatur nach Anspruch 1, wobei eine axiale Linie des Wasserauslasslochs (8) senkrecht zu einer Ebene der axialen Linien der Heiß- und Kaltwassereinlassrohre (1,2) ist und wobei die zwei Wasserauslasslöcher (8) an dem äußeren Gehäuse (3) symmetrisch an zwei Seiten der Ebene der axialen Linien der Heiß- und Kaltwassereinlassrohre (1,2) sind.

3. Wasserhahnstruktur für konstante Temperatur nach Anspruch 2, wobei der Umschaltstab für den Wasserkanal (5) drei Arbeitspositionen aufweist, wobei es sich um eine für das auslaufende Wasser gesperrte Arbeitsposition und zwei Arbeitspositionen für den Wasserauslass handelt,
wobei die axiale Linie des Wasserausgabelochs (7), wenn der Umschaltstab für den Wasserkanal (5) in der für das auslaufende Wasser gesperrten Arbeitsposition ist, in der Ebene der axialen Linien der Heiß- und Kaltwassereinlassrohre (1,2) ist und wobei,
wenn der Umschaltstab für den Wasserkanal (5) in der Arbeitsposition für den Wasserauslass ist, die axiale Linie des Wasserausgabelochs (7) senkrecht zu der Ebene der axialen Linien der Heiß- und Kaltwassereinlassrohre (1, 2) ist, derart, dass das Wasserausgabeloch (7) in Kommunikation mit dem Wasserauslassloch (8) ist.

## Revendications

1. Structure de robinet à température d'eau constante, comprenant: un corps principal (14), un tube d'entrée d'eau froide (1), un tube d'entrée d'eau chaude (2), une poignée de permutation d'eau débitée (11), et une poignée de rotation de commande de température (10), dans laquelle le corps principal (14) possède une enveloppe extérieure (3) qui reçoit un noyau de valve à température constante (4), une tige de permutation de canal d'eau (5) et un canal à trou central (6), dans laquelle le tube d'entrée d'eau froide (1) et le tube d'entrée d'eau chaude (2) sont raccordés respectivement à l'enveloppe extérieure (3), dans laquelle le noyau de valve à température constante (4) prévu à l'intérieur de l'enveloppe extérieure (3) est raccordé au tube d'entrée d'eau froide (1) et au tube d'entrée d'eau chaude (2), et dans laquelle la tige de permutation de canal d'eau (5) est en communication avec un orifice de débit d'eau du noyau de valve à température constante (4), dans laquelle le canal à trou central (6) est prévu dans une portion centrale de la tige de permutation de canal d'eau (5), et dans laquelle un trou de sortie d'eau (7) est formé sur une surface de la tige de permutation de canal d'eau (5), dans laquelle le trou de sortie d'eau (7) communique avec le canal à trou central (6), dans laquelle, sur l'enveloppe extérieure (3), un trou de débit d'eau (8) est prévu qui communique avec le trou de sortie d'eau (7), et dans laquelle le noyau de valve à température constante (4) est raccordé à la poignée de rotation de commande de température (10) située à une extrémité de l'enveloppe extérieure (3), alors que la poignée de permutation d'eau débitée (11) située à l'autre extrémité de l'enveloppe extérieure (3) est raccordée à la tige de permutation de canal d'eau (5),
**caractérisée en ce que** la structure de robinet à température d'eau constante comprend en outre:
un ressort de compression (15), et
une pièce de joint d'étanchéité (9),
dans laquelle la pièce de joint d'étanchéité (9) est disposée sur le trou de sortie d'eau (7) et a son centre pourvu d'un trou de passage d'eau, et dans laquelle le ressort de compression (15) est prévu entre la pièce de joint d'étanchéité (9) et le trou de sortie d'eau (7).

2. Structure de robinet à température d'eau constante selon la revendication 1, dans laquelle une ligne axiale du trou de débit d'eau (8) est perpendiculaire à un plan des lignes axiales des tubes d'entrée d'eaux chaude et froide (1, 2), et dans laquelle les deux trous de débit d'eau (8) sur l'enveloppe extérieure (3) sont disposés symétriquement sur deux côtés du plan des lignes axiales des tubes d'entrée d'eaux chaude et froide (1, 2).

3. Structure de robinet à température d'eau constante selon la revendication 2, dans laquelle la tige de permutation de canal d'eau (5) possède trois positions de fonctionnement: une position de fonctionnement de fermeture d'eau et deux positions de fonctionnement de débit d'eau,
dans laquelle, lorsque la tige de permutation de canal d'eau (5) est dans la position de fonctionnement de fermeture d'eau, la ligne axiale du trou de sortie d'eau (7) est dans le plan des lignes axiales des tubes d'entrée d'eaux chaude et froide (1, 2), et
lorsque la tige de permutation de canal d'eau (5) est dans la position de fonctionnement de débit d'eau, la ligne axiale du trou de sortie d'eau (7) est perpendiculaire au plan des lignes axiales des tubes d'entrée d'eaux chaude et froide (1, 2), de telle sorte que le trou de sortie d'eau (7) soit en communication avec le trou de débit d'eau (8).
